# EUROPÄISCHE PATENTANMELDUNG

(11) **EP 3 318 517 A1**
(43) Veröffentlichungstag der Anmeldung: **09.05.2018**
(21) Anmeldenummer: 17197467.8
(22) Anmeldetag: 20.10.2017
(51) Int. Cl.: B65G 54/02, B65G 23/18, B65G 35/06

(54) **STETIGFÖRDERER**

(30) Priorität: 08.11.2016 DE 102016121349
(71) Anmelder: Axmann Förderysteme GmbH, 04442 Zwenkau (DE)
(72) Erfinder: Axmann, Norbert, 74889 Sinsheim (DE)
(74) Vertreter: Geitz Truckenmüller Lucht Christ

(57) **Zusammenfassung**

Stetigförderer sind im Stand der Technik bereits seit vielen Jahren bekannt und werden beispielsweise als Sortiervorrichtungen eingesetzt. Bekannte Lösungen umfassen dabei ein Antriebselement, das über wenigstens zwei Trommeln geführt ist und eine Mehrzahl von Laufwagen zieht. Die Erfindung sieht vor, die Mitnahme der Laufwagen durch Permanentmagnete zu realisieren, die vorzugsweise auf dem Antriebselement angeordnet sind und dessen Zugkraft mithilfe an den Laufwagen angebrachter Mitnehmer auf diese übertragen.

## Beschreibung

Die vorliegende Erfindung betrifft einen Stetigförderer, umfassend einen über wenigstens zwei Trommeln umlaufendes Antriebselement sowie eine Mehrzahl von einem Zugtrum des Antriebselements gezogener Laufwagen.

Es sind eine Vielzahl von Fördervorrichtungen mit und ohne Sortiereinrichtungen bekannt geworden. Solche Einrichtungen bilden häufig ein umlaufendes, endloses System. Dabei werden als Endlosfördermittel überwiegend Ketten oder Keilriemen als Zug- und Tragorgane eingesetzt. Derartige Vorrichtungen sind beispielsweise aus der DE 198 01 706 A1 und der DE 100 13 332 A1 bekannt geworden.

Ein wesentliches Merkmal von kombinierten Förder- und Sortiereinrichtungen ist es, dass zu der Förderfunktion eine Ausschleusfunktion hinzutritt, also dass eine Verteilung der zu sortierenden Stückgüter auf die gewünschten Zielstellen stattfindet, wobei der Ausschleusmechanismus mit den Fördermitteln umläuft.

Derartige Sortieranlagen können in Kippschalen-, Quergurt- und Gleitschuhsortierer untergliedert werden.

Eine Transport- und Sortiervorrichtung der Eingangs genannten Art ist aus der DE 29 05 313 C2 bekannt geworden. Dabei werden aufeinanderfolgende Förderwagen mittels mehrerer Reibräder angetrieben. Die Reibräder übertragen ihre Drehbewegung durch Reibschluss auf einen Antriebsgurt, welcher entlang der Förderstrecke umlaufend angeordnet und mit den Förderwagen verbunden ist. Der Gurt ist dabei bei jedem Förderwagen durch eine Nut geführt, wo er mithilfe eines Befestigungsbolzens am Förderwagen kraftschlüssig befestigt ist.

Der flexible Antriebsgurt muss entlang seiner gesamten Umlaufbahn durch eine Vielzahl von paarweise angeordneten, vertikalen Führungsrollen geführt werden, um eine Knickung des Antriebsgurts und eine ruckartige Bewegung der Förderwagen, insbesondere bei engen Kurvenradien zu vermeiden.

Diese Konstruktion ist aufwendig und führt zu einem erhöhten Verschleiß in Verbindung mit einem noch immer vergleichsweise hohen Geräuschpegel und hat deshalb in der Praxis keine Anwendung gefunden.

Der Einsatz von Klemmprofilen entlang der Längserstreckung einer solchen Fördereinrichtung, bei denen der Antriebsgurt zwischen zwei Klemmbacken festgeklemmt ist, führt bereits zu einer ersten Verbesserung im Hinblick auf eine verschleißärmere und leisere Konstruktion und ist in der DE 102 27 998 A1 offenbart.

Hiervon ausgehend liegt der vorliegenden Erfindung die Aufgabe zu Grunde, einen Stetigförderer zu schaffen, welcher trotz einfacher Konstruktionsweise einen sowohl verschleiß- als auch geräuscharmen Betrieb ermöglicht.

Dies gelingt durch einen Stetigförderer gemäß den Merkmalen des Anspruchs 1. Sinnvolle Weiterbildungen eines solchen Stetigförderers können den sich daran anschließenden Unteransprüchen entnommen werden.

Erfindungsgemäß weist ein Stetigförderer ein über wenigstens zwei Trommeln, nämlich wenigstens eine Antriebstrommel und wenigstens eine Umlenktrommel, umlaufendes Antriebselement, sowie eine Mehrzahl von einem Zugtrum des Antriebselements gezogener Laufwagen auf. Die Laufwagen sind auf einem Standgestell aufgelagert, auf dem sie mit Laufrollen verfahren werden können. Die Laufrollen sorgen neben der Lagerung des Laufwagens auf dem Standgestell auch für eine Führung desselben. Das Antriebselement ist an seiner von den Trommeln wegweisenden Außenseite entlang seiner Längserstreckung mit einer Mehrzahl von magnetischen Wirkmitteln, beispielsweise Permanentmagneten versehen, mit deren Hilfe das Antriebselement Mitnehmer des Laufwagens magnetisch kontaktiert und bei einer Bewegung des Antriebselements mitnimmt. Magnetische Wirkmittel, ebenso wie die Mitnehmer können sowohl ferromagnetische Elemente als auch Permanentmagneten sein, so lange wenigstens eines der Elemente als Permanentmagnet ausgeführt ist. Die Permanentmagneten können aber auf dem Antriebselement, an dem Laufwagen, oder bei ungleichnamigen Kontaktflächen auch auf beiden Seiten vorgesehen sein.

Durch die magnetische Kontaktierung ist eine praktisch vollkommen verschleißfreie Mitnahme der Laufwagen durch das Antriebselement ermöglicht. Wo das Antriebselement von der Umlenktrommel oder der Antriebstrommel kommend auf den Mitnehmer des Laufwagens trifft, kontaktieren Magnete und Mitnehmer durch einfache Berührung und die Mitnahmekraft der Magnete steigt mit abnehmendem Abstand und Winkel des Antriebselements zu dem Laufwagen und dessen Mitnehmern. Ebenso kontinuierlich und geräuscharm vollzieht sich auch die Trennung von Antriebselement und Laufwagen am gegenüberliegenden Ende der Antriebsstrecke, wo das Antriebselement wiederum über die zweite Trommel von dem Laufwagen fortgelenkt wird.

Aufgrund dieser einfachen aber wirkungsvollen Konstruktion ist damit sowohl ein überschaubarer Konstruktionsaufwand zur Schaffung eines Stetigförderers erforderlich, als auch ein geräuscharmer Betrieb desselben ermöglicht.

Im Hinblick auf die Befestigung der Permanentmagneten an dem Antriebselement bestehen verschiedene Möglichkeiten. Allgemein werden zur Befestigung der Permanentmagneten Befestigungsmittel eingesetzt, die durch eine Montagebohrung der Permanentmagneten und eine Durchgriffsöffnung im Antriebselement hindurchgreifen und damit eine mechanische, kraftschlüssige Verbindung zwischen den Permanentmagneten und dem Antriebselement schaffen.

Die Montagebohrung kann in diesem Zusammenhang in einer Mulde des Permanentmagneten angeordnet sein, so dass ein Kopf des Befestigungsmittels gegenüber der Oberfläche des Permanentmagneten zurückversetzt oder maximal bündig mit dieser angeordnet werden kann.

Bevorzugtermaßen werden die Permanentmagneten mittels einer Schraubverbindung, bestehend aus einer Schraubverbindung und einer Mutter, sowie bedarfsweise weiteren Unterlegscheiben, Sprengringen und dergleichen mehr, hergestellt sein. In diesem Fall wird vorzugsweise der Kopf der Schraube in der Mulde eingebettet sein und hinter der Oberfläche des Permanentmagneten zurückversetzt bleiben.

Insbesondere wenn es sich bei dem Antriebselement um einen Antriebsgurt handelt, welcher über Trommeln mit durchgehender Oberfläche geführt wird, kann es sinnvoller sein, die Mutter in der Mulde des Permanentmagneten anzuordnen und eine Flachkopfschraube von der Innenseite des Antriebsgurts durch die Montagebohrung zu stecken, wobei die Schraube dann maximal bündig mit der Oberfläche des Permanentmagneten enden sollte, um einen flächigen Kontakt des Permanentmagneten mit den Mitnehmern der Laufwagen zu ermöglichen. Sofern die Mutter oder ein größerer Schraubenkopf auf der Innenseite eines solchen Antriebsgurts eingesetzt werden soll, ist es sinnvoll, die Oberfläche der Trommeln hieran anzupassen. Diese kann aus einer Mehrzahl paralleler und untereinander beabstandeter Reibscheiben gebildet sein, welche zwischen sich den für die Muttern oder Schraubenköpfe erforderlichen Raum freihalten.

In gleicher Art und Weise können anstelle der lösbaren Schrauben auch Nieten und andere unlösbare Verbindungen zwischen den Permanentmagneten und dem Antriebselement hergestellt werden, insbesondere auch Klebeverbindungen, Schweißverbindungen und Lötverbindungen. Es kann vorgesehen sein, dass die Permanentmagneten an dem umlaufenden Antriebselement durch eine Klebeverbindung, Schweißverbindung oder Lötverbindung befestigt sind.

Permanentmagneten bestehen aus einem relativ spröden Material, was sie für Brüche und anderweitige mechanische Beeinträchtigungen anfällig macht. Um diese zu vermeiden, können die Permanentmagnete mit einer stoßfesten Umhüllung versehen werden, die mechanische Kräfte abfedern. Eine derartige Umhüllung soll aus einem nichtmagnetischen Material hergestellt sein, um die Funktion der Permanentmagneten nicht zu beeinflussen, so dass sich Materialien wie Gummi, oder auch Metalle wie Aluminium besonders dafür eignen. Es kann vorgesehen sein, dass die stoßfeste Umhüllung aus Gummi oder Aluminium hergestellt ist.

Ferner kann das Antriebselement auf seiner Außenseite Reibleisten aufweisen, welche wenigstens abschnittsweise vorgesehen werden können. Diese Reibleisten sind bevorzugtermaßen wenigstens genauso hoch wie die Permanentmagneten, können aber auch höher sein als diese. Zwischen ihnen und den Laufwagen kann zusätzlich zum Magnetismus ein Reibschluss eine weitere Kraftübertragung auf die Laufwagen bewirken.

Zwar können die Reibleisten auch nur abschnittsweise vorgesehen werden, es erscheint aber durchaus vorteilhaft, wenn diese vollständig umlaufend gebildet sind und damit aufgrund ihres Reibschlusses mit dem Boden der Laufwagen eine zusätzliche durchgehende Kraftübertragung bewirken.

Eine besonders bevorzugte Ausgestaltung des Antriebselements sieht vor, dass abwechselnde Reihen von einer oder mehreren Reibleisten und einer oder mehreren Reihen von Permanentmagneten auf der Oberfläche des Antriebselements gebildet sind, um eine flächendeckende Kraftübertragung zu gewährleisten.

Anstelle der Anbringung von Reibleisten zwischen den Permanentmagneten können diese auch in hierfür vorgesehene Vertiefungen eingebettet werden, welche vorzugsweise die Form der Permanentmagneten nachbilden und diese formschlüssig oder mit Spiel aufnehmen.

Als Antriebselemente eignen sich im Prinzip alle Arten von belastbaren, umlaufenden Strängen, insbesondere Antriebsgurte. Ein solcher Antriebsgurt kann ferner mit Stahldraht verstärkt sein, um eine größere Kraft zu übertragen und den Antriebsgurt robuster zu machen. Ebenfalls eignen sich Antriebsketten, Scharnierbänder aus Stahl oder Kunststoff, Kunststoffgliederbänder oder Zahnriemen besonders für den erfindungsgemäßen Einsatz. An diesen Antriebselementen sind dann ebenfalls Bohrungen und Laschen für die Befestigung der Magnete vorgesehen. Antriebselemente dieser Art können höhere Zugkräfte übertragen, dies auch für den Transport von Blechbehältern, Stahlgestellen und ähnlichem.

Je nachdem welche Art von Stetigförderer eingesetzt wird, können die Mitnehmer ganz unterschiedlich gebildet werden. So kann etwa bei einem Einsatz von Laufwagen der Mitnehmer als Bodenblech gebildet werden, welches von den Permanentmagneten angezogen und gehalten werden kann. Insbesondere eignet sich eine solche Lösung für Querbandsorter, die einen solchen definierten Boden besitzen.

Alternativ kann der Stetigförderer aber auch als Schüttgutförderer ausgestaltet sein, in dessen Förderband eine Schicht aus Stahlelementen oder Stahlseilen eingelassen ist. Im Sonderfall des Stahlbandförderers ist das Förderband selbst aus Stahl hergestellt und seinerseits ferromagnetisch, so dass die Permanentmagnete, welche in diesem Fall an dem Antriebselement befestigt sind, in direkten Kraftschluss mit dem Förderband treten können.

Die vorstehend beschriebene Erfindung wird im Folgenden anhand eines Ausführungsbeispiels näher erläutert.

Es zeigen
- Figur 1: in einer Draufsicht einen Stetigförderer mit einer in sich geschlossenen Sortierstrecke, die in einer Horizontalebene verläuft und je zwei Geradabschnitte und diese an ihren Enden miteinander verbindende halbkreisbogenförmige Abschnitte besitzt in einer Draufsicht,
- Figur 2: einen der Schnittlinie II-II in Figur 1 entsprechenden Querschnitt durch den Stetigförderer, wobei als Laufwagen ein Querbandsorter und als Antriebselement ein Antriebsgurt mit Permanentmagneten eingesetzt ist,
- Figur 3: in einer Ansicht gemäß Pfeil III in Figur 2 mittels einer Gliederkette gelenkig aneinander gekoppelte Laufwagen sowie einen magnetischen Gurtantrieb mit unterseitig an den Laufwagen angreifenden Permanentmagneten,
- Figur 4: eine seitliche Draufsicht aus der Perspektive der gegenüberliegenden Seite zu Figur 2
- Figur 5: eine Draufsicht auf den über einer Umlenktrommel umgelenkten Antriebsgurt mit Permanentmagneten und Reibleisten,
- Figur 6: eine seitliche Querschnittsansicht des Antriebsgurts gemäß Figur 5 durch eine Reihe von Permanentmagneten,
- Figur 7: eine ausschnittsweise Draufsicht auf einen Antriebsgurt mit eckigen Permanentmagneten in versetzter Anordnung,
- Figur 8: eine seitliche Querschnittsansicht eines mit dem Antriebsgurt verschraubten Permanentmagneten,
- Figur 9: eine Variante der Figur 8, bei der dem Permanentmagneten eine stoßfeste Umhüllung zugefügt worden ist,
- Figur 10: eine weitere Variante der Figur 8, bei welcher der Permanentmagnet in einer Gurtvertiefung eingebettet ist,
- Figur 11: eine Variante der Figur 2 mit einem Schüttgutförderer in einer Querschnittsdarstellung
- Figur 12: in einer ausschnittsweisen Seitenansicht das Führen aneinandergekoppelter Laufwagen in unterschiedlichen Ebenen,
- Figur 13: in einer Draufsicht auf einen Stetigförderer eine Sortierstrecke mit einem von Fig. 1 abweichenden Streckenverlauf, sowie
- Figur 14: in einer Querschnittsansicht ein Kettenglied einer mehrsträngigen Rollenkette mit seitlich befestigten Permanentmagneten als alternatives Antriebselement.

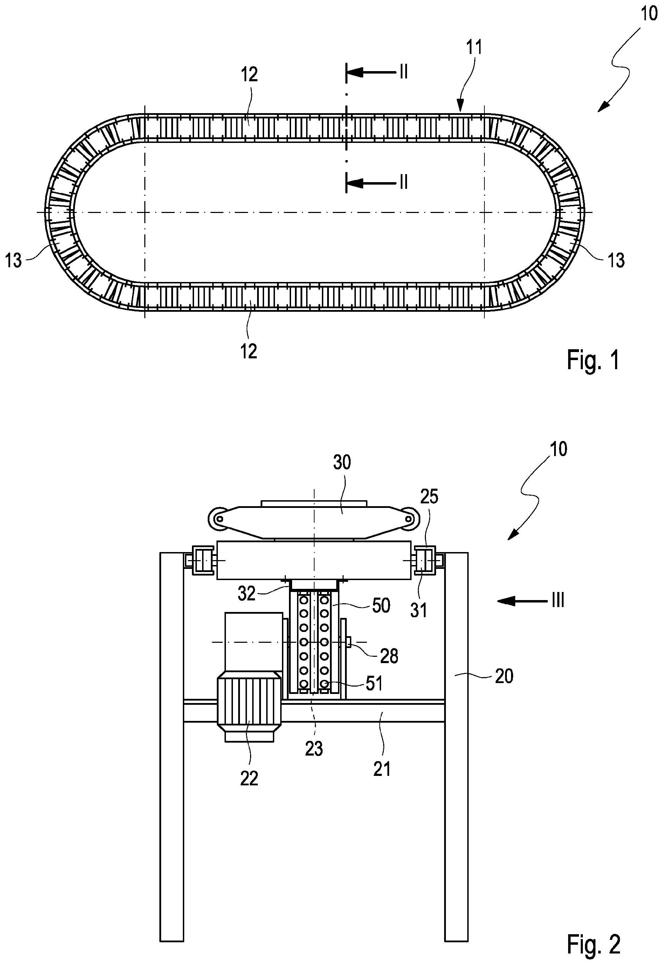

Der in den Figuren 1 bis 3 veranschaulichte Stetigförderer 10 besitzt eine in sich geschlossene Sortierstrecke 11, die in einer Horizontalebene verläuft und zwei geradlinige Sortierabschnitte 12 sowie zwei letztere miteinander verbindende bogenförmige Sortierabschnitte 13 aufweist. Längs der Sortierstrecke 11 sind mindestens eine Aufgabestation und aufeinanderfolgend mehrere Abwurfstationen mit seitlichen Abwurfrutschen angeordnet. Die Aufgabestation und die Abwurfstationen mit den genannten Abwurfrutschen sind in der Zeichnung nicht veranschaulicht.

Der Stetigförderer 10 umfasst ferner als Antriebselement einen Antriebsgurt 50 mit einer Vielzahl auf ihm angeordneter Permanentmagnete 51, welche den in Figur 2 gezeigten Laufwagen in Form eines Querbandsorters 30 an einem Mitnehmer in Form eines Bodenblechs 32 ziehen können. Durch eine Drehung der Antriebstrommel 23 wird der Antriebsgurt 50 aufgrund von Reibschluss zwischen die Antriebstrommel 23 bildenden parallelen Reibscheiben und der Innenseite des Antriebsgurts 50 der Antriebsgurt vorwärts gezogen. Die auf der Außenseite des Antriebsgurts 50 befindlichen Permanentmagneten 51 geraten hierbei mit einem Mitnehmer, hier einem Bodenblech 32 in Kontakt und ziehen dieses mit sich, wodurch der Querbandsorter 30 in Bewegung gesetzt wird.

Die Querbandsorter 30 besitzen jeweils zwei auf beiden Seiten in Förderrichtung voneinander beabstandeten Laufrollen 31, die in seitlich beabstandet voneinander vorrichtungsfest angeordneten Laufschienen 25 in im einzelnen in hier nicht interessierender Weise geführt sind. Auf dem Querbandsorter 30 ist jeweils ein quer zur Sortierstrecke 11 antreibbares Gurtband aufgenommen. Die Gurtbänder der Querbandsorter 30 sind jeweils über Umlenkrollen mit sich in Förderrichtung erstreckenden Drehachsen geführt. Der Querantrieb der Gurtbänder der Querbandsorter 30 erfolgt durch in den Abwurfstationen wahlweise zur Zusammenwirkung bringbare Antriebsmittel, deren Beschaffenheit und Funktion indessen hier auch nicht weiter interessiert.

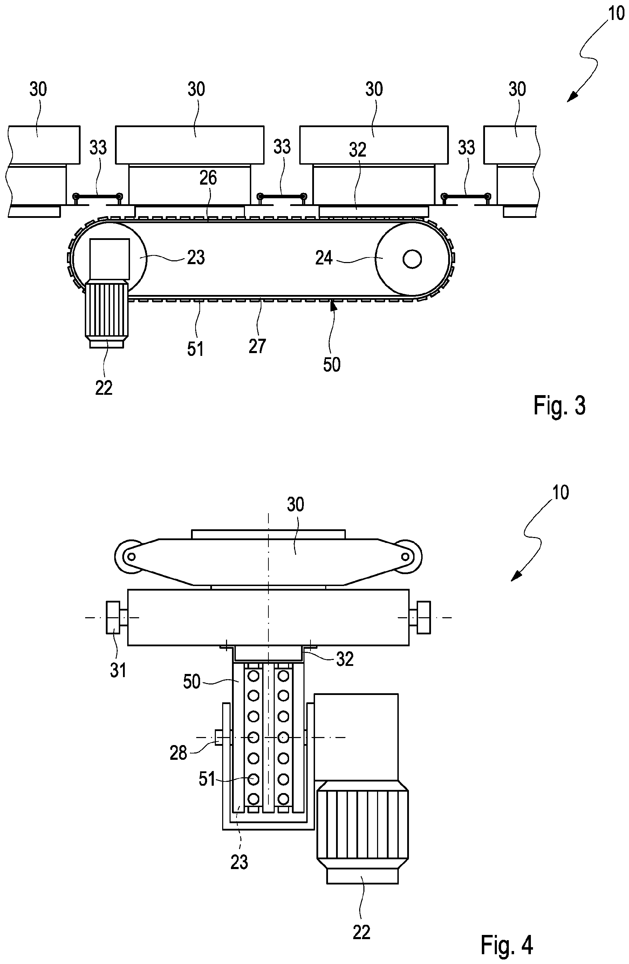

Wie in Figur 3 gezeigt sind die aufeinanderfolgend längs der Sortierstrecke 11 bewegbar geführten Querbandsorter 30 über gelenkige Kupplungen 33 aneinander gekoppelt, so dass die Querbandsorter 30 geradlinig und bogenförmig ausgebildete Abschnitte 12, 13 der in Figur 1 gezeigten Sortierstrecke 11 durchlaufen können, darüber hinaus aber auch auf erhöhte oder abgesenkte Sortierabschnitte übergeführt werden können. Jeweils für einen Abschnitt der Sortierstrecke 11 befindet sich ein Laufwagen im Bereich des Antriebsgurts 50, dessen Zugtrum 26 mit den an ihm befestigten Permanentmagneten 51 mit den Mitnehmern der Querbandsorter 30 in Eingriff stehen. Das Leertrum 27 wird auf der Unterseite, beabstandet zu den Querbandsortern 30, zurückgeführt. Eine Umlenktrommel 24 sorgt für die erforderliche Spannung des Antriebsgurts 50 und für den erforderlichen Reibschluss, um die Kraft des Antriebs 22 über die Antriebstrommel 23 auf den Antriebsgurt 50 zu übertragen.

Figur 4 zeigt weiter in größerem Detail einen auf dem Antriebsgurt 50 aufgesetzten Querbandsorter 30, der ein Bodenblech 23 aufweist, mit dem er auf den Permanentmagneten 51 des Antriebsgurts 50 aufliegt. Über eine Antriebsachse 28 treibt ein Antrieb 22 die hier nicht sichtbare Antriebstrommel 23 an, über welche der Antriebsgurt 50 gespannt ist.

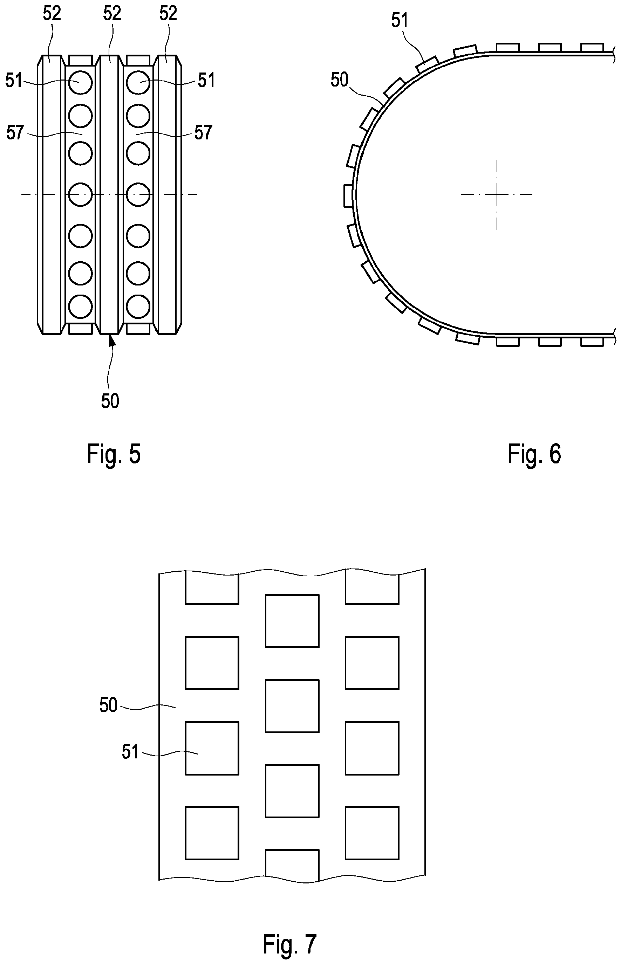

Für einen besseren Schutz auf dem Antriebsgurt 50 sorgt im Einzelnen eine Mehrzahl von Reibleisten 52, welche in Figur 5 dargestellt sind. Diese sind im vorliegenden konkreten Beispiel mittig sowie an beiden Rändern des Antriebsgurts 50 auf dessen Außenseite angeordnet und dort durch Kleben oder Schweißen mit dem Antriebsgurt 50 verbunden. Zwischen den Schutz- bzw. Reibleisten 52 und damit in einer von den Reibleisten 52 gebildeten Gurtvertiefung 57 sind die Permanentmagneten 51 aufgereiht und stellen damit zweifach die Mitnahme eines auf dem Antriebsgurt 50 platzierten Laufwagens sicher. Zunächst erfolgt die Mitnahme aufgrund der magnetischen Haftkraft der Permanentmagneten 51, die aber zusätzlich durch den zwischen den Reibleisten 52 und dem Bodenblech 32 entstehenden Reibschluss unterstützt wird. Im Bereich der Antriebstrommel 23 bzw. der Umlenktrommel 24 entfernen sich aufgrund des von dem Antriebsgurt 50 beschriebenen Bogen die Permanentmagnete 51 von den Mitnehmern der Laufwagen, so dass diese einfach und geräuschlos außer Eingriff des Antriebsgurtes geraten. Dies ist weiter in Figur 6 zu sehen, wo die Umlenkung aus Figur 5 von der Seite als Querschnitt durch eine der Reihen von Permanentmagneten 51 gezeigt ist.

Figur 7 zeigt eine alternative Gestaltung der Anordnung und Formgebung der Permanentmagnete 51 auf einem Abschnitt des Antriebsgurts 50. In der hier gezeigten Variante sind die Permanentmagnete 51 in ihrer Grundform rechteckig.

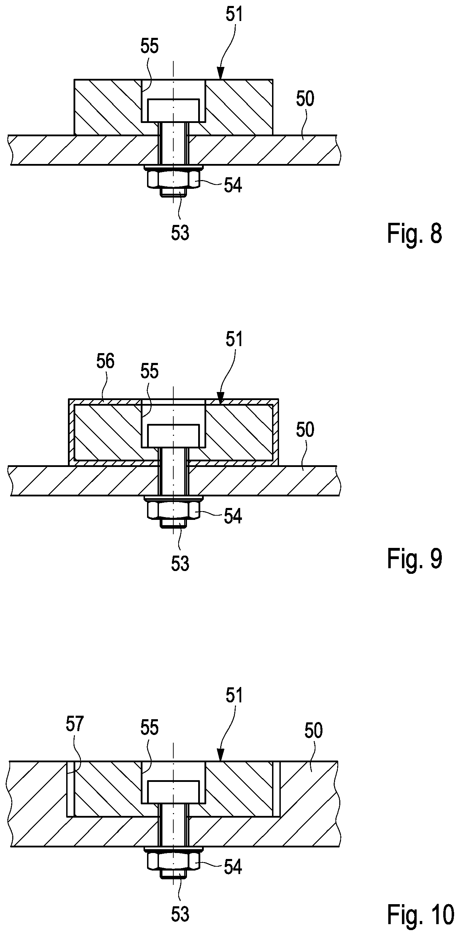

Figuren 8, 9 und 10 zeigen drei Varianten eines mit dem Antriebsgurt 50 verschraubten Permanentmagneten 51 in einer Querschnittsdarstellung. Die Permanentmagneten 51 weisen zur vereinfachten Befestigung an dem Antriebsgurt 50 eine Mulde 55 auf, in deren Mitte eine Bohrung angeordnet ist, durch die eine Schraube den Permanentmagneten 51 und gleichzeitig auch den Antriebsgurt 50 durchgreift. Die Mulde 55 ist so tief, dass der Schraubenkopf die Oberfläche des Permanentmagneten 51 nicht überragt und damit beim Kontakt mit dem Laufwagen nicht stört.

In Figur 9 weist der Permanentmagnet 51 zusätzlich eine stoßfeste Umhüllung 56 auf, mit deren Hilfe Stöße gegen das spröde Material des Permanentmagneten 51 abgefedert werden, so dass die Haltbarkeit des Permanentmagneten 51 verbessert ist.

Schließlich ist in Figur 10 gezeigt, wie der Permanentmagnet 51 entsprechend Figur 7 in einer Gurtvertiefung 57 eingelassen ist, so dass der den Permanentmagneten 51 umgebende Antriebsgurt 50 in Reibschluss mit dem darüber liegenden und hier nicht näher gezeigten Laufwagen geraten kann, während gleichzeitig der Permanentmagnet 51 einen magnetischen Kraftschluss mit dem Laufwagen eingeht.

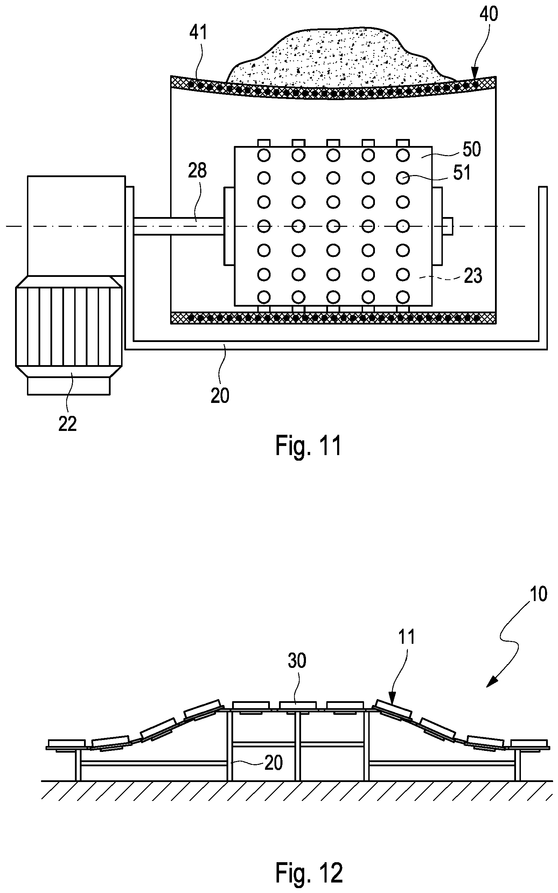

Analog zu Figur 3 zeigt die Figur 11 eine weitere Ausgestaltung der Erfindung, welche aber mit einem Schüttgutförderer 40 arbeitet. Dieser läuft mit dem Sortiergut in einem Abstand über den Antriebsgurt hinweg. Im Gegensatz zu der in Figur 3 gezeigten Anordnung ist in Figur 11 das Zugtrum der untere Teil des Antriebsgurts 50, welcher von dem Antrieb 22 über die Antriebsachse 28 und die Antriebstrommel 23 eine Kraftübertragung erfährt, während der obere Teil das Leertrum darstellt. Der leer zurücklaufende Schüttgutförderer 40 ist auf der Unterseite des Antriebsgurts 50 Im Eingriff mit den Permanentmagneten, wobei die Mitnehmer in diesem Fall in den Schüttgutförderer 40 eingebettete Stahlseile 41 sind.

Figur 12 veranschaulicht in einer schematischen Seitenansicht einen gattungsgemäßen Stetigförderer 10, bei dem die auf einem nur angedeuteten Standgestell 20 aufgenommene Sortierstrecke 11 abschnittsweise erhöht ist.

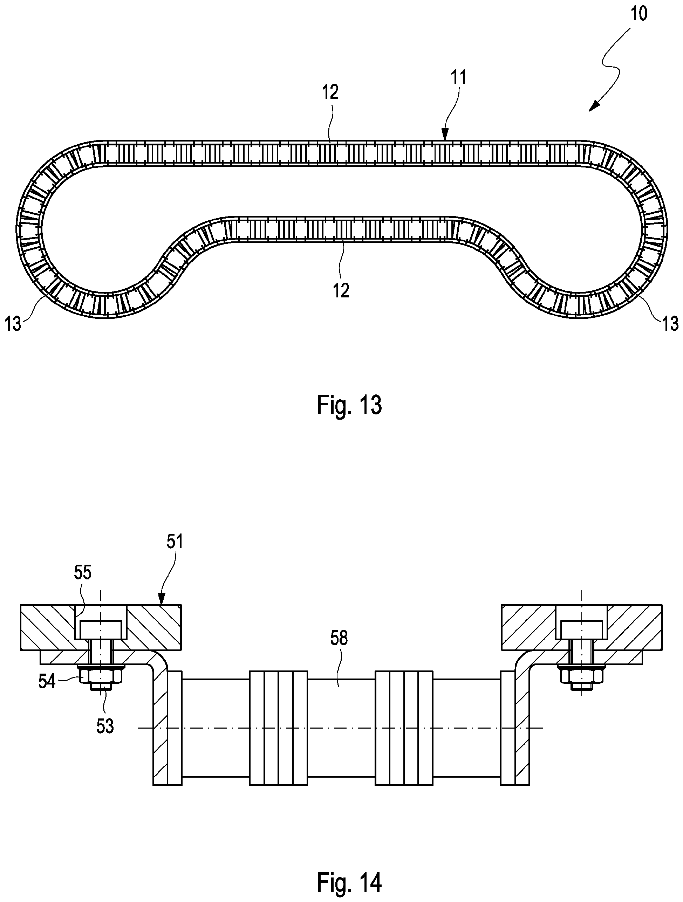

Die in Figur 13 veranschaulichte Sortierstrecke 11 besitzt ebenfalls zwei beabstandet voneinander verlaufende geradlinige Sortierabschnitte 12 und zwei diese miteinander verbindende bogenförmige Sortierabschnitte 13, die allerdings annähernd als Dreiviertelkreis ausgebildet sind. Der beschriebene Stetigförderer10 kann neben halbkreisförmigen Anordnungen auch ohne Weiteres enge Kurvenanordnungen überwinden, da die Konstruktion der Mitnehmer der einzelnen Laufwagen keinen besonderen geometrischen Vorgaben unterworfen sind.

In einer weiteren Variante ist diese Erfindung auch für andere Einsatzfälle von großem Vorteil. So können anstatt eines Antriebsgurts auch stärkere Antriebselemente wie Antriebsketten 58, Scharnierstahlbänder, Kunststoffgliederbänder Zahnriemen und weitere eingesetzt werden. Die Permanentmagnete 51 werden dann ähnlich wie in Figur 14 dargestellt an dem Antriebselement befestigt.

Vorstehend beschrieben ist somit ein Stetigförderer, dessen Laufwagen über ein Antriebselement angetrieben werden, dem eine Vielzahl von magnetischen Wirkmitteln zugeordnet sind und das über eine magnetische Kopplung magnetische Gegenwirkmittel kraftschlüssig kontaktiert. Dies ermöglicht eine sowohl einfache, als auch effektive und geräuscharme Konstruktion.

### BEZUGSZEICHENLISTE

- 10: Stetigförderer
- 11: Sortierstrecke
- 12: geradliniger Sortierabschnitt
- 13: bogenförmiger Sortierabschnitt
- 20: Standgestell
- 21: Querträger
- 22: Antrieb
- 23: Antriebstrommel
- 24: Umlenktrommel
- 25: Laufschiene
- 26: Zugtrum
- 27: Leertrum
- 28: Antriebsachse
- 30: Querbandsorter
- 31: Laufrolle
- 32: Bodenblech
- 33: Kupplung
- 40: Schüttgutförderer
- 41: Stahlseile
- 50: Antriebsgurt
- 51: Permanentmagnet
- 52: Reibleiste
- 53: Schraube
- 54: Mutter
- 55: Mulde
- 56: Umhüllung
- 57: Gurtvertiefung
- 58: Antriebskette

## Patentansprüche

1. Stetigförderer, umfassend ein über wenigstens zwei Trommeln umlaufendes Antriebselement sowie eine Mehrzahl von einem Zugtrum (26) des Antriebselements gezogener Laufwagen,
**dadurch gekennzeichnet, dass** das Antriebselement an seiner von den Trommeln (23, 24) wegweisenden Außenseite entlang seiner Längserstreckung verteilt angeordnete magnetische Wirkmittel aufweist und den Laufwagen bodenseitig mit diesen zusammenwirkende magnetische Gegenwirkmittel zugeordnet sind.

2. Stetigförderer gemäß Anspruch 1, **dadurch gekennzeichnet, dass** es sich entweder bei den magnetischen Wirkmitteln oder den magnetischen Gegenwirkmitteln um Permanentmagneten (51) handelt, wobei das jeweils andere Element entweder ebenfalls aus Permanentmagneten oder aus einem ferromagnetischen Mitnehmer gebildet ist.

3. Stetigförderer gemäß Anspruch 2, **dadurch gekennzeichnet, dass** die Permanentmagneten (51) wenigstens eine Montagebohrung aufweisen und mithilfe von Befestigungsmitteln auf dem Antriebselement befestigt sind.

4. Stetigförderer gemäß Anspruch 3, **dadurch gekennzeichnet, dass** die wenigstens eine Montagebohrung in einer Mulde (55) zur Aufnahme eines Kopfs der Befestigungsmittel angeordnet ist.

5. Stetigförderer gemäß einem der Ansprüche 2 bis 4, **dadurch gekennzeichnet, dass** die Permanentmagneten (51) vermittels wenigstens einer Schraubverbindung, bestehend aus wenigstens einer Schraube (53) und einer Mutter (54) mit dem Antriebselement verbunden sind.

6. Stetigförderer gemäß Anspruch 5, **dadurch gekennzeichnet, dass** die Trommeln aus mehreren parallelen, voneinander beabstandeten Reibscheiben gebildet sind, wobei die Schraubverbindungen der Permanentmagneten (51) in zwischen den Reibscheiben freigehaltenen Zwischenräumen angeordnet sind.

7. Stetigförderer gemäß einem der Ansprüche 2 bis 6, **dadurch gekennzeichnet, dass** den Permanentmagneten (51) eine stoßfeste Umhüllung (56) zugeordnet ist.

8. Stetigförderer gemäß einem der Ansprüche 2 bis 7, **dadurch gekennzeichnet, dass** das Antriebselement auf seiner Außenseite zumindest abschnittsweise Reibleisten (52) aufweist.

9. Stetigförderer gemäß Anspruch 8, **dadurch gekennzeichnet, dass** die Reibleisten (52) zumindest näherungsweise die gleiche Höhe aufweisen wie die Permanentmagneten (51).

10. Stetigförderer gemäß einem der Ansprüche 8 oder 9, **dadurch gekennzeichnet, dass** die Reibleisten (52) umlaufend auf dem Antriebselement angeordnet sind.

11. Stetigförderer gemäß Anspruch 10, **dadurch gekennzeichnet, dass** die Reibleisten (52) streifenförmig in Längsrichtung des Antriebselements angeordnet sind und jeweils zwei Reibleisten (52) eine oder mehrere Reihen von Permanentmagneten (51) zwischen sich aufnehmen.

12. Stetigförderer gemäß einem der Ansprüche 2 bis 7, **dadurch gekennzeichnet, dass** die Permanentmagneten (51) auf dem Antriebsmittel in Vertiefungen eingebettet sind.

13. Stetigförderer gemäß einem der vorhergehenden Ansprüche, **dadurch gekennzeichnet, dass** es sich bei dem Antriebselement um einen, vorzugsweise mit Stahldraht verstärkten, Antriebsgurt (50), eine Antriebskette (58), ein Scharnierband, ein Kunststoffgliederband oder einen Zahnriemen handelt.

14. Stetigförderer gemäß einem der vorhergehenden Ansprüche, **dadurch gekennzeichnet, dass** die magnetischen Gegenwirkmittel der Laufwagen als Bodenblech (32) ausgebildet sind.

15. Stetigförderer gemäß einem der Ansprüche 1 bis 13, **dadurch gekennzeichnet, dass** es sich bei dem Stetigförderer (10) um einen Stahlbandförderer oder um einen Schüttgutförderer, in dessen Laufband Stahlelemente oder Stahlseile (41) eingebettet sind, handelt.
